# EUROPEAN PATENT SPECIFICATION

(11) **EP 3 287 482 B1**
(45) Date of publication and mention of the grant of the patent: **15.06.2022**
(21) Application number: 17195879.6
(22) Date of filing: 03.03.2009
(51) Int. Cl.: C08G 63/183, C08G 63/06, C08G 63/19, C08G 63/91, C08L 67/03, C08L 67/04, C08L 93/00, C08L 3/00, C08G 63/78, C08G 63/199

(54) **METHOD OF MAKING BIO-BASED POLYETHYLENE TEREPHTHALATE POLYMER PRODUCT**
VERFAHREN ZUR HERSTELLUNG VOM ARTIKEL AUS BIOBASIERTEM POLYETHYLENTEREPHTHALATPOLYMER
PROCÉDÉ DE FABRICATION D'UN ARTICLE À BASE DE POLYMÈRE DE POLYÉTHYLÈNE TÉRÉPHTALATE D'ORIGINE BIOLOGIQUE

(30) Priority: 28.03.2008 US 40349 P; 14.09.2008 US 210208
(43) Date of publication of application: 28.02.2018
(62) Divisional of application: 09723793.7
(73) Proprietor: The Coca-Cola Company, Atlanta, GA 30313 (US)
(72) Inventor: KRIEGEL, Robert M, Decatur, GA Georgia 30030 (US); HUANG, Xiaoyan, Marietta, GA Georgia 30068 (US); SCHULTHEIS, Mikell W, Hilton Head Island, South Carolina 29926 (US)
(74) Representative: Dehns

(56) References cited:
- EP-A1- 1 882 712
- GB-A- 789 809
- DATABASE WPI Week 200768 Thomson Scientific, London, GB; AN 2007-721881 XP002722982, -& JP 2007 176873 A (TORAY IND INC) 12 July 2007 (2007-07-12)

## Description

### FIELD OF INVENTION

This invention relates generally to a method of producing a bio-based polyethylene terephthalate polymer product using a bio-based polyethylene terephthalate polymer that contains a diol component that derives partially or totally from bio-based materials.

### BACKGROUND

Polyethylene terephthalate and its copolyesters (hereinafter referred to collectively as "PET" or "polyethylene terephthalate") is a widely used raw material for making packaging articles in part due to their excellent combination of clarity, mechanical, and gas barrier properties. Examples of PET products include, but are not limited to, bottles and containers for packaging food products, soft drinks, alcoholic beverages, detergents, cosmetics, pharmaceutical products and edible oils.

Most commercial methods produce PET with petrochemically derived raw materials. Therefore, the cost of production is closely tied to the price of petroleum. Petrochemically-derived PET contributes to greenhouse emissions due to its high petroleum derived carbon content. Furthermore, petrochemicals take hundreds of thousands of years to form naturally, making petrochemically-derived products non-renewable, which means they cannot be re-made, re-grown, or regenerated at a rate comparative to its consumption.

One approach to substituting petrochemically-derived PET has been the production of polylactic acid (PLA) bioplastics from bio-based materials such as corn, rice, or other sugar and starch-producing plants. See e.g. U.S. Pat. No. 6,569,989. As described in U.S. Pat. No. 5,409,751 and U.S. Pat. App. No. 20070187876, attempts have been made to use PLA resins in injection stretch molding processes for producing containers. However, it is often difficult to adapt PLA into current PET production lines or to satisfactorily substitute PET with PLA in many applications due to the significantly different properties between PLA and PET. For example, PLA typically has a lower gas barrier property than PET, which makes PLA containers less suitable for storing items such as carbonated beverages or beverages sensitive to oxygen. Furthermore, most recycling systems currently in use are designed for PET, which would be contaminated if PLA was introduced. This problem could be overcome by costly solutions such as using distinctive bottle types between PLA and PET or by investing in suitable sorting technology or new recycling streams. JP-A-2007/176873 discloses a process for making a PET with terephthalic acid as bio based monomer.

Thus, there exists a need for a PET derived from renewable resources that shares similar properties as petroleum-derived PET. It would be also desirable in some applications if the PET derived from renewable resources can be processed through existing PET manufacturing facilities and/or can be readily recycled through the systems designed for recycling petroleum-derived PET.

Other objects, features, and advantages of this invention will be apparent from the following detailed description, drawings, and claims.

### BRIEF DESCRIPTION OF THE DRAWING

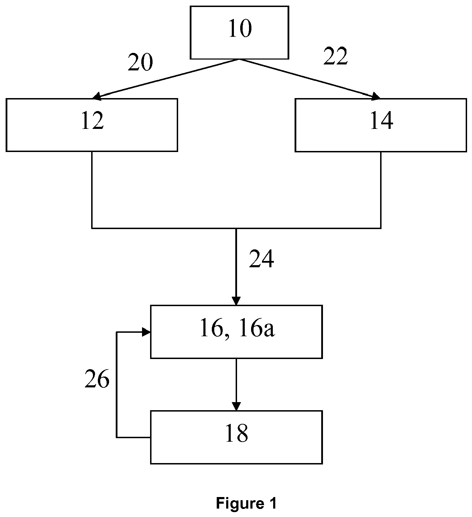

Fig. 1 is a flowchart illustration of the method of making a bio-based polyethylene terephthalate product that partially or totally derives from bio-based materials.

### DETAILED DESCRIPTION OF THE PRESENT INVENTION

The term "bio-based," as used in this application, indicates the inclusion of some component that derives from at least one bio-based material. For example, a "bio-based PET polymer" would be a PET polymer that comprises at least one component that partially or totally derives from at least one bio-based material.

### Bio-Based PET Polymer

The method of the present invention forms a bio-based PET polymer that comprises from 25 to 75 weight percent of a terephthalate component and from 20 to 50 weight percent of a diol component, wherein at least 10 weight percent of the diol component is derived from at least one bio-based material and the terephthalate component is derived from petroleum. In a more particular embodiment, at least about 20 weight percent of the diol component is derived from at least one bio-based material.

In one embodiment, the bio-based PET polymer comprises from about 30 to about 70 weight percent of the terephthalate component. In a more particular embodiment, the bio-based PET polymer comprises from about 40 to about 65 weight percent of the terephthalate component. In another embodiment, the bio-based PET polymer comprises from about 25 to about 45 weight percent of the diol component. In a more particular embodiment, the bio-based PET polymer comprises from about 25 to about 35 weight percent of the diol component.

The terephthalate component comprises terephthalic acid. The terephthalate component may also contain dimethyl terephthalate, isophthalic acid, and a combination thereof.

The diol component comprises ethylene glycol. The diol component may also comprise cyclohexane dimethanol. In one embodiment, the diol component comprises at least about one weight percent of cyclohexane dimethanol. At least ten weight percent of the diol component is derived from at least one bio-based material.

Other ingredients may be added to the bio-based PET polymer. Those of ordinary skill in the art would readily be able to select the suitable ingredient(s) to add to the bio-based PET polymer to improve the desired properties, which may depend on the type of application intended. In a particular embodiment, the bio-based PET polymer may further comprise a supplemental component selected from at least one coloring agent, at least one fast reheat additive, at least one gas barrier additive, at least one UV blocking additive, and a combination thereof.

Bio-based PET polymers may be used to form bio-based resins, which may be further processed into bio-based containers using methods including, but not limited to, injection molding and stretch blow molding. The method of the present invention forms bio-based beverage containers that comprise the bio-based PET polymers of the above-described embodiments. To be suitable for certain applications, containers have a certain intrinsic viscosity to withstand movements, shelving, and other requirements. In a more particular embodiment of the present invention, the bio-based container has an intrinsic viscosity from about 0.45 dL/g to about 1.0 dL/g.

It is known in the art that carbon-14 (C-14), which has a half life of about 5,700 years, is found in bio-based materials but not in fossil fuels. Thus, "bio-based materials" refer to organic materials in which the carbon comes from non-fossil biological sources. Examples of bio-based materials include, but are not limited to, sugars, starches, corns, natural fibers, sugarcanes, beets, citrus fruits, woody plants, cellulosics, lignocelluosics, hemicelluloses, potatoes, plant oils, other polysaccharides such as pectin, chitin, levan, and pullulan, and a combination thereof. According to a particular embodiment, the at least one bio-based material is selected from corn, sugarcane, beet, potato, starch, citrus fruit, woody plant, cellulosic lignin, plant oil, natural fiber, oily wood feedstock, and a combination thereof.

As explained previously, the detection of C-14 is indicative of a bio-based material. C-14 levels can be determined by measuring its decay process (disintegrations per minute per gram carbon or dpm/gC) through liquid scintillation counting. In one embodiment of the present invention, the bio-based PET polymer comprises at least about 0.1 dpm/gC (disintegrations per minute per gram carbon) of C-14.

The invention is further illustrated by the following example.

### Example I

The following samples were measured, in a blind test fashion, to determine the presence of C-14 content by liquid scintillation counting. The levels detected were normalized to existing data available at University of Georgia that correlates the C-14 level to the bio-based percentage. The results are shown in Table 1.

**Table 1**

| **Sample ID** | **Sample Description** | **C-14 (dpm/gC)** | **% bio-based material** |
|---|---|---|---|
| 1 | Ethylene glycol (totally derived from ethanol converted from sugars) | 15 ± 0.13 | 100 ± 1 |
| 2 | Ethylene glycol (totally derived from corn) | 15 ± 0.13 | 98 ± 1 |
| 3 | Ethylene glycol (totally derived from petroleum) | 0.04 ± 0.13 | 0 ± 1 |
| 4 | Ethylene glycol (totally derived from petroleum) | 0.04 ± 0.13 | 0 ± 1 |
| 5 | PET (totally derived from petroleum) | 0.07 ± 0.13 | 0 ± 1 |
| 6 | PET (contains about 30 wt% of ethylene glycol from sample 1 and about 70 wt% of terephthalic acid derived from petroleum) | 3.01 ± 0.13 | 21 ± 1 |

As shown in Table 1, samples totally derived from petroleum (samples 2, 3, and 4) contain a negligible amount of C-14, indicating that about zero percent of the sample is made from bio-based materials. In contrast, samples that contain materials known to be partially or totally derived from a bio-based material (corn or sugar) show a much higher level of C-14. Based on the data, about 0.14 dpm/gC corresponds to about one percent of bio-based material in the sample.

### Method of Making Polyethylene Terephthalate Polymer

The method of the present invention comprises:
a. obtaining a diol component comprising ethylene glycol, wherein at least 10 weight percent of the diol component is derived from at least one bio-based material;
b. obtaining a terephthalate component comprising terephthalic acid, wherein the terephthalate component is derived from petroleum;
c. reacting the diol component and the terephthalate component to form a bio-based polyethylene terephthalate polymer, wherein the bio-based polyethylene terephthalate polymer comprises from about 25 to about 75 weight percent of the terephthalate component and from about 20 to about 50 weight percent of the diol component; and
d making a bio-based polyethylene terephthalate product from the bio-based polyethylene terephthalate polymer;
wherein the bio-based polyethylene terephthalate product is a beverage container.

Referring to Fig. 1, the method of the present invention encompass a process for producing a bio-based PET polymer **16** comprising obtaining a diol component **12** comprising ethylene glycol **12a** [step **20**], obtaining a terephthalate component **14** comprising terephthalic acid [step **22**], wherein at least 10 weight percent of the diol component (**12**) is derived from at least one bio-based material **10**, reacting the diol component **12** and the terephthalate component **14** to form a bio-based PET polymer **16** [step **24**], wherein the bio-based PET polymer **16** comprises from 25 to 75 weight percent of the terephthalate component **14** and from 20 to 50 weight percent of the diol component **12.** In a more particular embodiment, as illustrated in Reaction I, step **24** further comprises reacting the diol component **12** and the terephthalate component **14** through an esterification reaction to form bio-based PET monomers **16a,** which then undergo polymerization to form the bio-based PET polymer **16.**

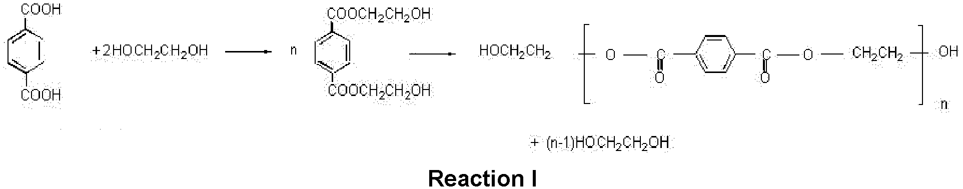

At least ten weight percent of the diol component **12** is derived from at least one bio-based material **10.** In still a more particular embodiment, at least 30 weight percent of the diol component **12** is derived from at least one bio-based material **10.**

The diol component **12** may be partially or totally derived from at least one bio-based material using any process. In one embodiment, step **20** comprises obtaining a sugar or derivatives thereof from at least one bio-based material and fermenting the sugar or derivatives thereof to ethanol. In another embodiment, step **20** comprises gasification of at least one bio-based material **10** to produce syngas, which is converted to ethanol. In a more particular embodiment, as illustrated by Reaction II, step **20** further comprises dehydrating ethanol to ethylene, oxidizing ethylene to ethylene oxide, and converting ethylene oxide to ethylene glycol.

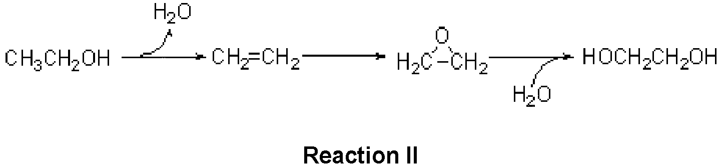

In another embodiment, step **20** comprises obtaining a sugar or derivatives thereof from at least one bio-based material and converting the sugar or derivatives thereof to a mixture comprising ethylene glycol and at least one glycol excluding the ethylene glycol. Step **20** further comprises isolating the ethylene glycol from the mixture. The mixture may be repeatedly reacted to obtain higher yields of ethylene glycol. In a more particular embodiment, the at least one glycol is selected from butanediols, propandiols, and glycerols.

In one embodiment, at least 70 weight percent of the diol component **12** is derived from at least one bio-based material **10.** According to a particular embodiment, the bio-based material is selected from corn, sugarcane, beet, potato, starch, citrus fruit, woody plant, cellulosic lignin, plant oil, natural fiber, oily wood feedstock, and a combination thereof.

The method of the invention further comprises making a bio-based PET product **18** from the bio-based PET polymer **16.** The bio-based PET product **18** is a beverage container. The bio-based PET product **18** may be recycled or reused through recycling systems [step **26**] designed for petroleum-derived PET products.

## Claims

1. A method of producing a bio-based polyethylene terephthalate polymer product comprising:
a. obtaining a diol component comprising ethylene glycol, wherein at least 10 weight percent of the diol component is derived from at least one bio-based material;
b. obtaining a terephthalate component comprising terephthalic acid, wherein the terephthalate component is derived from petroleum;
c. reacting the diol component and the terephthalate component to form a bio-based polyethylene terephthalate polymer, wherein the bio-based polyethylene terephthalate polymer comprises from 25 to 75 weight percent of the terephthalate component and from 20 to 50 weight percent of the diol component; and
d. making a bio-based polyethylene terephthalate product from the bio-based polyethylene terephthalate polymer;
wherein the bio-based polyethylene terephthalate product is a beverage container.

2. The method of claim 1, wherein the at least one bio-based material is selected from corn, sugarcane, beet, potato, starch, citrus fruit, woody plant, cellulosic lignin, oily wood feedstock, and a combination thereof.

3. The method of any of claims 1-2, wherein step (a) further comprises
i. obtaining sugar or derivatives thereof from at least one bio-based material;
ii. fermenting sugar or derivatives thereof to ethanol;
iii. dehydrating ethanol to ethylene;
iv. oxidizing ethylene to ethylene oxide; and
v. converting ethylene oxide to ethylene glycol.

4. The method of any of claims 1-2, wherein step (a) further comprises
i. obtaining sugar or derivatives thereof from at least one bio-based material;
ii. reacting sugar or derivatives to form a mixture comprising ethylene glycol and at least one glycol excluding the ethylene glycol; and
iii. separating ethylene glycol from the mixture.

5. The method of claim 1, wherein at least 30 weight percent of the diol component is derived from at least one bio-based material.

6. The method of claim 1, wherein at least 70 weight percent of the diol component is derived from at least one bio-based material.

7. The method of claim 1, further comprising recycling the bio-based PET product through recycling systems designed for petroleum-derived PET products.

## Patentansprüche

1. Verfahren zur Herstellung eines Polyethylenterephthalatpolymerprodukts auf Biobasis, umfassend:
a. Erhalten einer Diolkomponente, die Ethylenglycol umfasst, wobei wenigstens 10 Gewichtsprozent der Diolkomponente von wenigstens einem Material auf Biobasis abgeleitet sind;
b. Erhalten einer Terephthalatkomponente, die Terephthalsäure umfasst, wobei die Terephthalatkomponente von Erdöl abgeleitet ist;
c. Umsetzen der Diolkomponente und der Terephthalatkomponente, um ein Polyethylenterephthalatpolymer auf Biobasis zu bilden, wobei das Polyethylenterephthalatpolymer auf Biobasis von 25 bis 75 Gewichtsprozent an der Terephthalatkomponente und von 20 bis 50 Gewichtsprozent an der Diolkomponente umfasst; und
d. Herstellen eines Polyethylenterephthalatprodukts auf Biobasis aus dem Polyethylenterephthalatpolymer auf Biobasis;
wobei das Polyethylenterephthalatprodukt auf Biobasis ein Getränkebehälter ist.

2. Verfahren gemäß Anspruch 1, wobei das wenigstens eine Material auf Biobasis ausgewählt ist aus Mais, Zuckerrohr, Rüben, Kartoffeln, Stärke, Zitrusfrüchten, holzigen Pflanzen, cellulosischem Lignin, ölhaltigem Holz-Einsatzmaterial und Kombinationen davon.

3. Verfahren gemäß einem der Ansprüche 1-2, wobei Schritt (a) ferner umfasst:
i. Erhalten von Zucker oder Derivaten davon aus wenigstens einem Material auf Biobasis;
ii. Fermentieren von Zucker oder Derivaten davon zu Ethanol;
iii. Dehydrieren von Ethanol zu Ethylen;
iv. Oxidieren von Ethylen zu Ethylenoxid; und
v. Umwandeln von Ethylenoxid zu Ethylenglycol.

4. Verfahren gemäß einem der Ansprüche 1-2, wobei Schritt (a) ferner umfasst:
i. Erhalten von Zucker oder Derivaten davon aus wenigstens einen Material auf Biobasis;
ii. Umsetzen von Zucker oder Derivaten, um ein Gemisch zu bilden, das Ethylenglycol und wenigstens ein von dem Ethylenglycol verschiedenes Glycol umfasst; und
iii. Abtrennen von Ethylenglycol aus dem Gemisch.

5. Verfahren gemäß Anspruch 1, wobei wenigstens 30 Gewichtsprozent der Diolkomponente von wenigstens einem Material auf Biobasis abgeleitet sind.

6. Verfahren gemäß Anspruch 1, wobei wenigstens 70 Gewichtsprozent der Diolkomponente von wenigstens einem Material auf Biobasis abgeleitet sind.

7. Verfahren gemäß Anspruch 1, ferner umfassend Recycling des PET-Produkts auf Biobasis durch Recyclingsysteme, die für Erdöl-abgeleitete PET-Produkte ausgelegt sind.

## Revendications

1. Procédé de production d'un produit de polymère de type poly(téréphtalate d'éthylène) d'origine biologique comprenant :
a. l'obtention d'un composant de type diol comprenant de l'éthylène glycol, au moins 10 pour cent en poids du composant de type diol étant issus d'au moins une matière d'origine biologique ;
b. l'obtention d'un composant de type téréphtalate comprenant de l'acide téréphtalique, le composant de type téréphtalate étant issu de pétrole ;
c. la mise en réaction du composant de type diol et du composant de type téréphtalate pour former un polymère de type poly(téréphtalate d'éthylène) d'origine biologique, le polymère de type poly(téréphtalate d'éthylène) d'origine biologique comprenant de 25 à 75 pour cent en poids du composant de type téréphtalate et de 20 à 50 pour cent en poids du composant de type diol ; et
d. fabrication d'un produit de poly(téréphtalate d'éthylène) d'origine biologique à partir du polymère de type poly(téréphtalate d'éthylène) d'origine biologique ;
le produit de poly(téréphtalate d'éthylène) d'origine biologique étant un récipient pour boisson.

2. Procédé selon la revendication 1, l'au moins une matière d'origine biologique étant choisie parmi le maïs, la canne à sucre, la betterave, la pomme de terre, l'amidon, des agrumes, des plantes ligneuses, de la lignine cellulosique, une matière première de bois huileux et une combinaison correspondante.

3. Procédé selon l'une quelconque des revendications 1 à 2, l'étape (a) comprenant en outre
i. l'obtention d'un sucre ou de dérivés correspondants à partir d'au moins une matière d'origine biologique ;
ii. la fermentation d'un sucre ou de dérivés correspondants en éthanol ;
iii. la déshydratation d'éthanol en éthylène ;
iv. l'oxydation d'éthylène en oxyde d'éthylène ; et
v. la conversion d'oxyde d'éthylène en éthylène glycol.

4. Procédé selon l'une quelconque des revendications 1 à 2, l'étape (a) comprenant en outre
i. l'obtention d'un sucre ou de dérivés correspondants à partir d'au moins une matière d'origine biologique ;
ii. la mise en réaction d'un sucre ou de dérivés pour former un mélange comprenant de l'éthylène glycol et au moins un glycol à l'exclusion de l'éthylène glycol ; et
iii. la séparation d'éthylène glycol du mélange.

5. Procédé selon la revendication 1, au moins 30 pour cent en poids du composant de type diol étant issus d'au moins une matière d'origine biologique.

6. Procédé selon la revendication 1, au moins 70 pour cent en poids du composant de type diol étant issus d'au moins une matière d'origine biologique.

7. Procédé selon la revendication 1, comprenant en outre le recyclage du produit de PET d'origine biologique par des systèmes de recyclage conçus pour des produits de PET issus de pétrole.
